# EUROPÄISCHE PATENTANMELDUNG

(11) **EP 2 774 715 A1**
(43) Veröffentlichungstag der Anmeldung: **10.09.2014**
(21) Anmeldenummer: 13157916.1
(22) Anmeldetag: 06.03.2013
(51) Int. Cl.: B23P 6/00, F01D 5/00, B23K 26/34

(54) **Verfahren zur Reparatur einer äußeren Oberfläche oder einer freistehenden Wand eines Bauteils**

(71) Anmelder: Siemens Aktiengesellschaft, 80333 München (DE)
(72) Erfinder: Bostanjoglo, Georg, Dr., 14163 Berlin (DE); Burbaum, Bernd, Dr., 14612 Falkensee (DE)

(57) **Zusammenfassung**

Durch die zusätzliche Abschrägung (13) vor dem Wiederaufbau von Material auf den Boden (7, 7'), der zwischen den Abschrägungen (13) vorhanden ist, kann für den nachfolgenden Aufbau eine Kantensicherung erreicht werden.

## Beschreibung

Die Erfindung betrifft die Reparatur und den Wiederaufbau einer äußeren Oberfläche oder einer Wand, die freisteht, und wieder aufgebaut werden soll.

Turbinenschaufeln als ein Beispiel für Bauteile weisen einen sogenannten Kronenboden auf, der eine Vertiefung aufweist, der durch eine äußere freistehende Wand gebildet wird.

Durch Korrosion, Oxidation und Kontakt mit ihrem Gehäuse kann ein solcher Kronenboden verschleißen und muss für den Wiedereinsatz der Turbinenschaufel neu aufgebaut werden.

Dabei wird oft in einer Ebene die Wand und ein Teil des Bodens abgetragen oder abgeschnitten und wieder aufgetragen, wobei es aber im Kantenbereich immer wieder beim Auftragsschweißen zu Problemen kommt.

Es ist daher Aufgabe der Erfindung das Auftragsschweißen im Bereich der Kante zu verbessern, um eine Formstabilität der Auftragsschweißung zu erzielen.

Die Aufgabe wird gelöst durch ein Verfahren gemäß Anspruch 1 und ein Bauteil gemäß Anspruch 5.

Auftragsschweißungen können vorteilhafter Weise konturgenau wiederhergestellt werden.

In den Unteransprüchen sind weitere vorteilhafte Maßnahmen aufgelistet, die beliebig miteinander verbunden werden können, um weitere Vorteile zu erzielen.

Es zeigen:
Figur 1 eine Turbinenschaufel als beispielhaftes Bauteil,
Figuren 2-5 schematisch den Ablauf des Verfahrens.

Die Beschreibung und die Figuren stellen nur Ausführungsbeispiele der Erfindung dar.

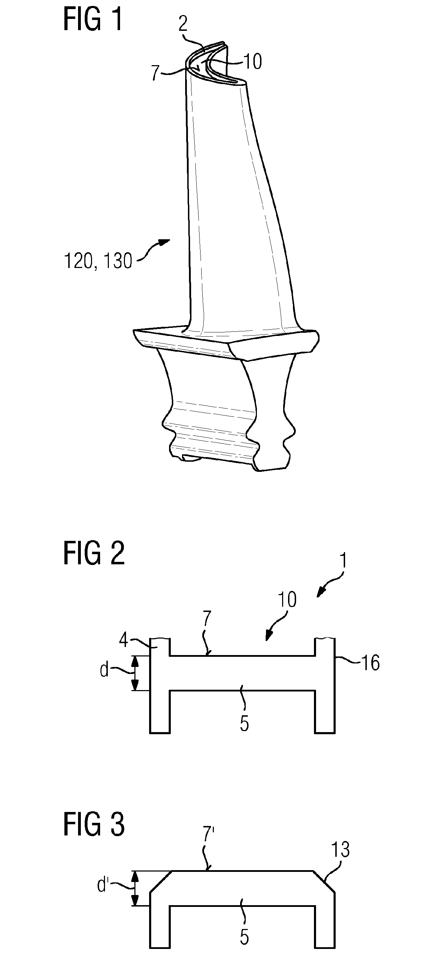

In Figur 1 ist eine neue Turbinenschaufel 120, 130, die eine Oberfläche 7 eines Kronenbodens mit einer äußeren freistehenden Wand 2 aufweist, gezeigt.
Die Oberfläche 7 ist in einer Vertiefung 10 angeordnet, die durch eine äußere Wand 2 begrenzt wird.
Der Boden 5 (Fig. 2) des Kronenbodens weist vorzugsweise eine Dicke d (Fig. 2) auf, wenn das Bauteil 120, 130 hohl ist.

Diese äußere Wand 4 und/oder ein Boden 5 des Kronenbodens ist beschädigt (Fig. 2) bzw. weist nicht mehr die geforderte Sollgeometrie auf und muss neu aufgebaut werden.

In Figur 2 ist der Kronenboden mit Oberfläche 7 und Vertiefung 10 schematisch mit defekter Wand 4 dargestellt.

In Figur 3 ist ein erster Bearbeitungsschritt des zu reparierenden Kronenbodens dargestellt.
Dabei wird die bisherige Wand 2, 4 abgetragen und gegebenenfalls ein Teil des Bodens 5 des Kronenbodens mit seiner Oberfläche 7, so dass d' ≤ d ist und dann eine Oberfläche 7' entsteht.
Darüber hinaus wird an der dann entstandenen Kante 16 (Fig. 2) eine umlaufende Abschrägung 13 erzeugt.

Die Wand 4 verlief vorher im Randbereich und soll wieder aufgebaut werden.

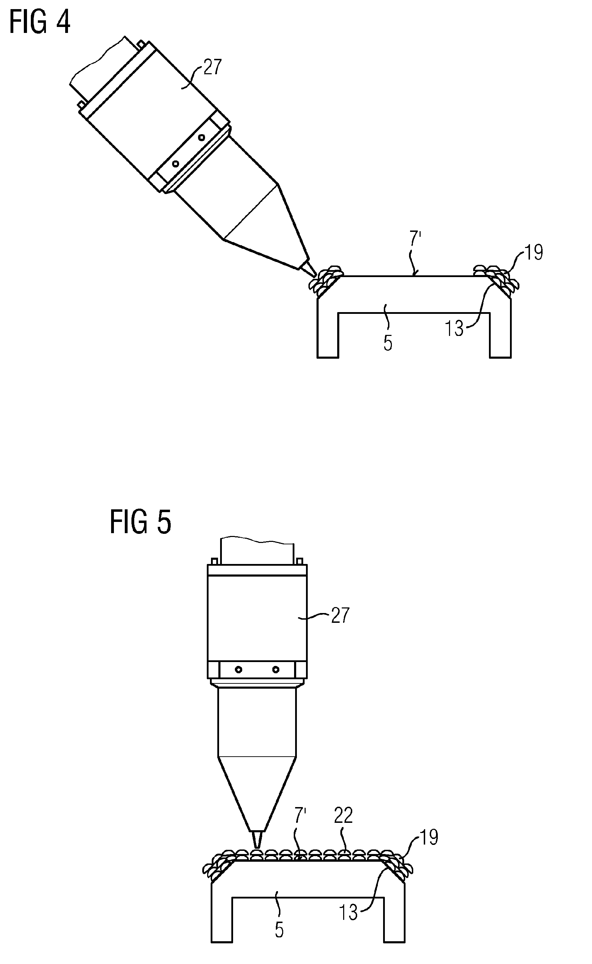

Als erster Wiederaufbauschritt wird nur auf die Abschrägung 13 Material 19 aufgetragen, das eine Kantenschweißung 19 ergibt und die über die Oberfläche 7, 7' hinausragt oder bis an die Ebene der Oberfläche 7, 7' reicht (Fig. 4) und in einem zumindest weiteren Schritt der Boden 5 wieder in der ursprünglichen Dicke durch Materialauftrag 22 erzeugt wird (Fig. 5).

Vorzugsweise wird zuerst die Kantenschweißung 19 vollständig aufgebracht.

Im nächsten Schritt gemäß Figur 5 wird der Boden 5 ggf. wieder auf die geforderte Dicke d gebracht, wobei die Kantenschweißung 19 hier als Stütze dient, damit das Material im Kantenbereich 16 nicht abfällt oder heruntertropft.

Als nächster Schritt, der nicht näher dargestellt ist, wird falls erforderlich die Wand 2 wieder hergestellt, wobei die Kantenschweißung 19 hier wiederum als Abstützung dient.

Das Material für die Kantenschweißung 19 und/oder den Materialauftrag 22 und die wiederaufzubauende Wand 2 ist vorzugsweise verschieden von dem Material des Bodens 5, kann aber auch dasselbe oder gleiche Material sein.
Das Material der Auftragsschweißung 19, 22 kann verschieden sein von dem Material des Bauteils 120, 130, was bei Turbinenschaufeln nickel- oder kobaltbasierte Superlegierungen darstellt, aber ebenso modifizierte nickel-oder kobaltbasierte Superlegierungen darstellt.

Die Beschichtung der Oberfläche 7' erfolgt vorzugsweise in einem Winkel von 90° über die gesamte Breite der Oberfläche 7'. Vergleichbares gilt für die Kantenschweißung 19 (Fig. 4).

Die Vorgehensweise mit der Abschrägung 13 der Kante 16, der separaten Kantenschweißung 19 kann auch nur für den alleinigen Wiederaufbau, Wandverstärkung einer Fläche 7' verwendet werden.

## Patentansprüche

1. Verfahren
zur Reparatur einer Oberfläche (7) mit einer Kante (16) und/oder einer äußeren Wand (2, 4) auf der Oberfläche (7), bei dem in einem ersten Schritt die Wand (2, 4) und/oder optional ein Teil des Bodens (5) der Oberfläche (7) abgetragen wird und
zusätzlich eine Abschrägung (13) einer Oberfläche (7, 7') im Bereich der äußeren Kante (16) erfolgt,
wobei die äußeren Kante (16) durch Abtrag der Wand (4) entstand,
so dass die Abschrägung (13) die Kante (16) abschrägt, wobei in einem ersten Auftragungsschritt von Material zuerst nur die Abschrägung (13) mit einer Kantenschweißung (19) versehen wird,
wobei die Kantenschweißung (19) über die Oberfläche (7, 7') hinausragt oder
bis an die Ebene der Oberfläche (7, 7') reicht und
in einem zumindest weiteren Schritt die Oberfläche (7, 7') wieder in der ursprünglichen Dicke durch Materialauftrag erzeugt wird und
optional eine neue Wand (2) erzeugt wird.

2. Verfahren nach Anspruch 1,
bei dem ein Laserschweißverfahren durchgeführt wird.

3. Verfahren nach einem oder beiden der Ansprüche 1 oder 2, bei dem ein Schweißstrahl,
insbesondere ein Laserstrahl,
senkrecht zur Abschrägung (13) und/oder Oberfläche (7,7') während des Schweißens steht.

4. Verfahren nach einem oder mehreren der Ansprüche 1 bis 3,
bei dem die Abschrägung (13) umlaufend um die Oberfläche (7, 7') vorhanden ist.

5. Bauteil,
insbesondere hergestellt nach einem oder mehreren der Ansprüche 1 bis 4,
das eine Kantenschweißung (19) auf einer Abschrägung (13) im Umfangsbereich der Oberfläche (7, 7') sowie eine Auftragsschweißung (22) dazwischen und
optional eine auftragsgeschweißte Wand (2) im Bereich der Kantenschweißung (19) aufweist.

6. Verfahren oder Bauteil nach einem mehreren der Ansprüche 1 bis 5,
bei dem die Auftragsschweißung (19) ein anderes Material darstellt als das Material des Bodens (5).

7. Verfahren oder Bauteil nach einem oder mehreren der Ansprüche 1 bis 6,
bei dem die Auftragsschweißung (22) und/oder Kantenschweißung (19) bearbeitet wird oder ist.
